# EUROPEAN PATENT SPECIFICATION

(11) **EP 4 430 330 B1**
(45) Date of publication and mention of the grant of the patent: **20.08.2025**
(21) Application number: 21964235.2
(22) Date of filing: 15.11.2021
(51) Int. Cl.: F16K 15/14, H01M 50/30, F16K 27/02, F16K 15/06, H01M 50/317, H01M 50/325

(54) **PRESSURE BALANCING DEVICE**
DRUCKAUSGLEICHSVORRICHTUNG
DISPOSITIF D'ÉQUILIBRAGE DE PRESSION

(43) Date of publication of application: 18.09.2024
(73) Proprietor: Bimed Teknik Aletler Sanayi ve Ticaret Anonim Sirketi, 342051 Beylikdüzü/Istanbul (TR)
(72) Inventor: CEYLAN, Seda, 342051 Beylikdüzü/ Istanbul (TR); ERDOGAN, Ahmet, 342051 Beylikdüzü/ Istanbul (TR)
(74) Representative: Mutlu, Aydin
(86) International application number: PCT/TR2021/051208
(87) International publication number: WO 2023/086040

(56) References cited:
- US-A1- 2017 146 142
- US-A1- 2021 127 511
- US-A1- 2021 320 375
- US-A1- 2021 320 375

## Description

### Technical Field

The present invention relates to a pressure balancing device used for balancing the internal pressure of the housing of an electrochemical device and the external environment pressure.

In particular, the invention relates to a pressure balancing device used in electrical vehicle batteries to balance the pressure difference between the battery housing and the external environment as a result of the pressure increase in the battery housing and to prevent explosion that may occur in the battery.

### State of the Art

The power to the engines of electric or hybrid vehicles is provided by electrochemical devices such as batteries, etc. Batteries produce gas during operation or generate temperature increases depending on the operation. In both cases, it causes an increase in pressure in the closed battery volume. Due to the increase in pressure, the operating efficiency of the battery decreases, and/or explosions may occur.

Different types of pressure balancing devices are currently used to prevent pressure increase in the battery housing. Pressure balancing devices balance the pressure difference between the internal pressure of the battery housing and the external environment pressure.

The document US2006275654A1 discloses a ventilation valve for use in batteries. The ventilation valve consists of a cap and a body. The ventilation valve is mounted on the fill tube of the battery by means of the body. The cap located at the upper end of the body closes the fill tube opening. The cylindrical sidewall of the cap extends downwards and surrounds the fill tube. Thus, the cylindrical sidewall acts as a resilient seal around the fill tube. When the internal pressure of the battery increases, the cylindrical sidewall flexes outward with the pressure of the fluid pressure coming from the inside, allowing the pressure to be released. When the external environment pressure and the internal pressure of the battery housing are balanced, the cylindrical sidewall recloses around the fill tube. Pressure balancing elements made of flexible material become useless because of time depending deformation. Moreover, the operation pressure ranges of the pressure balancing elements are not precise because of the flexibility of the material. The document WO2020241466A1 discloses a pressure relief valve connected to an opening of the battery. The pressure relief valve comprises a housing with a discharge hole that communicates with the external environment and a valve mechanism to open and close the said discharge hole. There is a cover on the housing, and the discharge hole located between the housing and the cover performs the gas release process. The valve mechanism comprises a valve element that closes the discharge hole and a spring that keeps the valve element in the closing position.

The document US 2021 320375 A1 discloses a pressure balancing device, according to the preamble of claim 1, suitable for being used for balancing the pressure in the batteries, comprising a body that is mounted on an opening of the battery housing and having a flow channel in its interior allowing fluid passage, a cover positioned on the body, which prevents the fluid passage between the interior of the battery housing and the exterior environment by closing the flow channel when the internal pressure of the battery housing and the external environment pressure are in balance, and which provides fluid passage by opening the flow channel when a difference occurs between the internal pressure of the battery housing and the external environment pressure, and at least one spring that allows the working pressure of the pressure of the pressure balancing device to be determined in direct proportion to the spring constant

The document US 2017 146142 A1 discloses a pressure balancing device suitable for being used for balancing the pressure in the batteries, comprising a body that is mounted on an opening of the battery housing and having a flow channel in its interior allowing fluid passage, a cover positioned on the body, which prevents the fluid passage between the interior of the battery housing and the exterior environment by closing the flow channel when the internal pressure of the battery housing and the external environment pressure are in balance, and which provides fluid passage by opening the flow channel when a difference occurs between the internal pressure of the battery housing and the external environment pressure.

The high component quantity in the pressure balancing elements makes it difficult to assemble the components during production and increases production costs.

In present art, the geometry of the lower surface of the cover/cap in the pressure balancing devices makes it difficult for the gas flow to come out.

As a result, due to above described disadvantages and inadequacy of existing solutions, it has been necessary to make development in the related art.

### Purpose of the Invention

The invention has been developed with inspiration from existing situation and purposes to eliminate the above-mentioned disadvantages.

The main purpose of the invention is to reduce the number of factors affecting the opening pressure in the pressure balancing device. In the pressure balancing device of the invention, only the spring constant determines the opening pressure of the cover. Thus, changes in the opening pressure of the pressure balancing device, which are produced in different periods or depending on the use in time, are prevented.

Another purpose of the invention is to provide a pressure balancing device capable of performing pressure equalization even with small-scale pressure changes. The pressure balancing device is automatically opened and closed in small-scale pressure increases by means of the spring system used in the pressure balancing device of the invention. Another purpose of the invention is to develop a cover geometry that allows the amount of fluid passing per unit time to increase when a difference between the internal pressure of the battery housing and the external pressure occurs. In the present invention, the geometry of the part of the cap facing the battery is in a concave form and increases the amount of fluid passing through.

Another purpose of the invention is to enable the pressure balancing device to be mounted on the battery without the need for any mounting apparatus. The pressure balancing device is mounted on the battery thanks to the locking tabs located on the body.

Another purpose of the invention is to provide sealing protection in different IP ratings by means of a first sealing element positioned between the body and the cap. The first sealing element has the form "V". In this way, the first sealing element provides sealing protection in the IP65, IP66, IP67, IP68 and IP69K ratings. The pointed end of the "V" shape of the first sealing element is positioned to face the flow channel. This placement of the first sealing element ensures an increase in the amount of fluid discharged per unit time.

Another purpose of the invention is to provide a pressure balancing device with a sealing element that adapts to battery housings of different thickness. The pressure balancing device can be mounted on battery housings of different thicknesses by means of a second sealing element that has a grooved structure. Thus, the sealing feature of the pressure balancing device is preserved in the battery housings of different thicknesses.

Another purpose of the invention is to align at least one spring at the center of the flow channel by means of at least one connecting element. Thus, the cover moves in the center of the flow channel during opening.

To meet the above-mentioned purposes, the invention is a pressure balancing device used for balancing the pressure in the batteries, comprising: a body that is mounted on an opening of the battery housing and having a flow channel in its interior allowing fluid passage; a cover positioned on the body, which prevents the fluid passage between the interior of the battery housing and the exterior environment by closing the flow channel when the internal pressure of the battery housing and the external environment pressure are in balance, and which provides fluid passage by opening the flow channel when a difference occurs between the internal pressure of the battery housing and the external environment pressure, in that, it comprises at least one spring that allows the working pressure of the pressure balancing device to be determined in direct proportion to the spring constant, and which enables the cover to close automatically when the internal pressure of the battery housing and the external environment pressure is balanced.

The structural and characteristic features and all advantages of the invention will be clarified with the detailed description of the figures and the following description. Therefore, the evaluation should be done by taking into account these figures and detailed explanation.

### Brief Description of Figures

**Figure 1****:** is the cross-sectional view of the pressure balancing device when the pressure between the battery housing and the external environment is in balance.
**Figure 2****:** is the cross-sectional view of the pressure balancing device when the internal pressure of the battery housing is higher than the environment pressure.

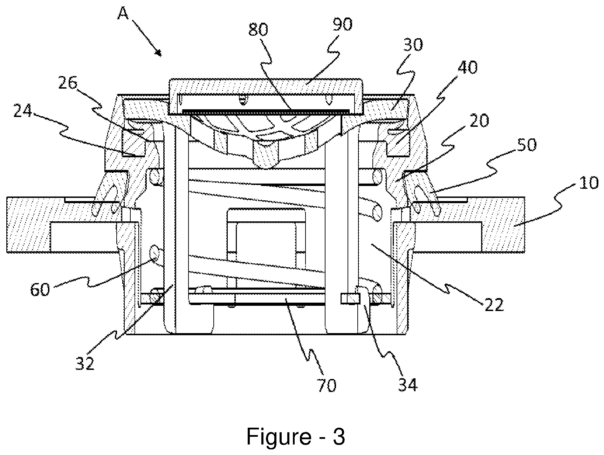

**Figure 3****:** is the cross-sectional view of the alternative embodiment of the pressure balancing device.

### Descripton of Part References

### Parça Referanslarinin Açiklamasi

A. Pressure balancing device
10. Battery housing
20. Body
22. Flow channel
24. Groove
26. Protrusion
30. Cap
32. Connection element
34. Pin
40. First sealing element
50. Second sealing element
60. Spring
70. Locking ring
80. Membrane
90. Protection cover

### Detailed Description of the Invention

In this detailed description, the preferred embodiments of the pressure balancing device (A) disclosed under the invention have been discloed solely fort he purpose of a better understanding of the subject.

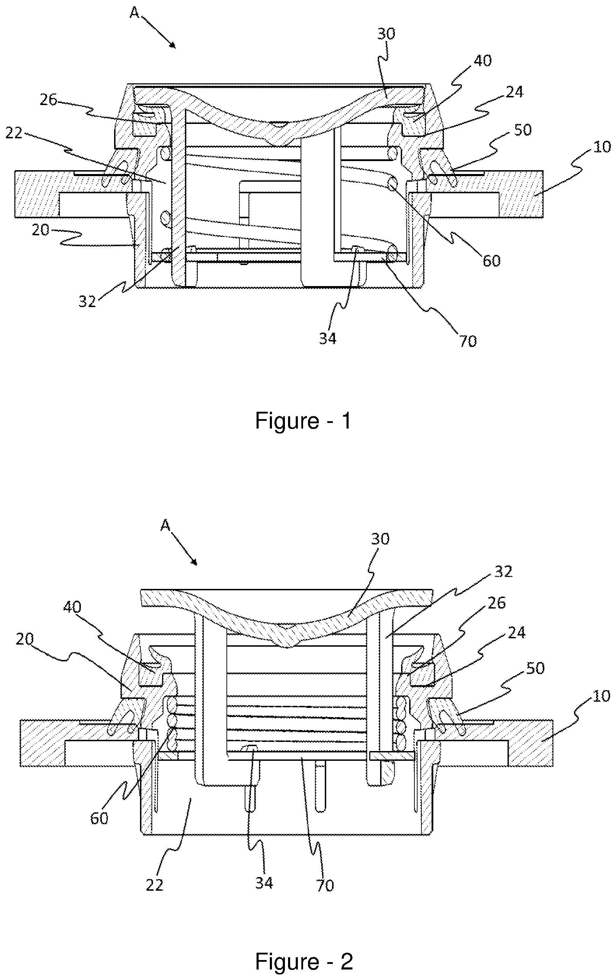

Referring to Figure 1, the pressure balancing device (A) is mounted in an opening located in the battery housing (10). The pressure balancing device (A) provides balancing of the internal pressure of the battery housing (10) and the external pressure. Here, the external environment defines the environment outside the battery housing (10). External environment pressure also refers to atmospheric pressure in a general sense or the pressure of the environment in which the battery is located.

The mounting of the pressure balancing device (A) to the battery housing (10) is provided by means of the body (20). The connection section of the body (20) may be in the form of a threaded, snap-fit, bayonet, or other connection types in the state of the art. The body (20) is mounted to the battery housing (10) without the need for any mounting equipment, thanks to the connection section. There is a flow channel (22) inside the body (20) that allows fluid to pass through.

The pressure balancing device (A) includes a cap (30) located on the body (20) and covering the flow channel (22). When the internal pressure of the battery housing (10) is in balance with the external pressure, the cap (30) closes the flow channel (22). Thus, the flow of fluid between the interior of the battery housing (10) and the external environment is prevented.

Referring to Figure 2, when a difference between the internal pressure of the battery housing (10) and the external environment pressure occurs, the cover (30) moves away from the body (20) with the effect of the internal pressure and the flow channel (22) opens. Thus, the internal fluid is discharged and the external pressure is equalized with the internal pressure of the battery housing (10). The surface of the cap (30) facing the flow channel (22) has a concave form. The amount of fluid discharged per unit time increases by means of the concave form of the cover (30). The cover (30) has at least one connection element (32). The connection element (32) extends within the flow channel (22). In a preferred embodiment of the invention, the cap (30) and at least one connection element (32) are integrated structures. In another preferred embodiment of the invention, the cap (30) and at least one connection element (32) are manufactured separately and then assembled to each other.

At least one first sealing element (40) is placed in at least one groove (24) located on the body (20). At the end of the groove (24) there is at least one protrusion (26). The first sealing element (40) is prevented from coming out of the groove (24) during fluid discharge by means of the protrusion (26). The first sealing element (40) provides the sealing of the flow channel (22) when the cap (30) is in closed position. In preffered embodiments of the invention, the first sealing element (40) is located between the body (20) and the cap (30). The first sealing element (40) has a "V" shaped form. In preffered embodiments of the invention, the pointed tip of the "V" shape is positioned to face the flow channel (22). The placement of the first sealing element (40) in this way ensures that the amount of fluid discharged per unit time increases. Another advantage of this placement is that the pressure balancing device (A) successfully passes the tests applied in the protection ratings IP65, IP66, IP67, IP68 and IP69K, which represent the sealing protection ratings.

There is at least a second sealing element (50) between the battery housing (10) and the body (20). The second sealing element (50) provides sealing between the battery housing (10) and the body (20). In preferred embodiments of the invention, the second sealing element (50) has a grooved structure. In this way, the second sealing element (50) can be used in the thicknesses of the battery housing (10) within a predetermined thickness range. Therefore, sealing is provided at different predetermined thicknesses of the battery housing (10) thicknesses without changing the second sealing element (50).

Automatic closing of the cap (30) when the internal pressure of the battery housing (10) and the external pressure are balanced is provided by at least one spring (60). The spring (60) surrounds the connection element (32). Thus, the alignment of the spring (60) in the center of the flow channel (22) is ensured. The spring (60) centered by the connection element (32) ensures that the cap (30) is opened without wobbling during fluid discharge. Therefore, the cap (30) moves in the center of the flow channel (22). In the pressure balancing device (A) which is the subject of the invention, the pressure range which the cap (30) will be opened can only be determined depending on the spring constant of the spring (60). In this way, it is ensured that the pressure balancing device (A) operates independently of all other variables in the predetermined pressure range. Variances in predetermined working pressure ranges that may occur due to different production times of pressure balancing devices (A) and/or variances in the working pressure ranges of the same pressure balancing device (A) due to time depending aging are prevented. In a preferred embodiment of the invention, the spring (60) is in helical form.

The lock ring (70) ensures that the spring (60) is fixed by compression. The lock ring (70) is mounted to at least one pin (34) on the connection element (32).

In alternative embodiments of the invention, the pressure balancing device (A) includes at least one membrane (80). The membrane (80) is placed on the cap (30) and the membrane (80) provides gas passage from the inside of the battery housing (10) to the outside when the cap (30) is closed. The membrane (80) allows gas passage and does not allow liquid passage. The pressure balancing device includes at least one protection cover (90) to protect the membrane (A) (80) from external effects.

## Claims

1. A pressure balancing device (A) used for balancing the pressure in batteries, comprising:
- a body (20) that is mounted on an opening of a battery housing (10) and having a flow channel (22) in its interior allowing fluid passage,
- a cover (30) positioned on the body (20), which prevents the fluid passage between the interior of the battery housing (10) and the exterior environment by closing the flow channel (22) when the internal pressure of the battery housing (10) and the external environment pressure are in balance, and which provides fluid passage by opening the flow channel (22) when a difference occurs between the internal pressure of the battery housing (10) and the external environment pressure,
- at least one spring (60) that allows the working pressure of the pressure balancing device (A) to be determined in direct proportion to the spring constant, and which enables the cover (30) to close automatically when the internal pressure of the battery housing (10) and the external environment pressure is balanced, **characterised in that,**
- the pressure balancing device (A) further comprises at least one connection element (32) that extends within the flow channel (22), wherein the spring (60) surrounds the connection element (32), and the connection element (32) aligns the said spring (60) to the center of the flow channel (22) and enables the said cover (30) to operate in the center of the flow channel (22) during the opening.

2. A pressure balancing device (A) according to claim 1, **characterised in that** the surface of the cover (30) facing the flow channel (22) is in a concave form, which enables the amount of passing fluid to increase.

3. A pressure balancing device (A) according to claim 1, **characterized in that** it comprises a locking ring (70) which is mounted on at least one pin (34) on the connecting element (32) and ensures that the spring (60) is fixed by compression.

4. A pressure balancing device (A) according to claim 1, **characterised in that** the spring (60) is in helical form.

5. A pressure balancing device (A) according to claim 1, **characterised in that** it comprises at least one first sealing element (40) which is placed in at least one groove (24) on the body (20) and provides sealing of the flow channel (22) when the cover (30) is in the closed position.

6. A pressure balancing device (A) according to claim 5, **characterised in that**, it comprises at least one protrusion (26) at the end of the groove (24) that prevents the first sealing element (40) from exiting the groove (24) during the fluid passage.

7. A pressure balancing device (A) according to claim 5, **characterized in that** the first sealing element (40) has a "V" shape form.

8. A pressure balancing device (A) according to claim 1, **characterised in that**, it comprises at least one second sealing element (50) placed between the battery housing (10) and the body (20) and providing a sealing between the battery housing (10) and the body (20).

9. A pressure balancing device (A) according to claim 8, **characterized in that** the second sealing element (50) is in a grooved structure in order to provide the sealing between the body (20) and the battery housing (10) at the thicknesses of the battery housing (10) within a predetermined thickness range.

10. A pressure balancing device (A) according to claim 1, **characterized in that** it comprises at least one membrane (80) placed on the cover (30) which allows gas passage from the inside of the battery housing (10) to the outside environment and does not allow the passage of liquid when the cover (30) is in the closed position.

11. A pressure balancing device (A) according to claim 10, **characterised in that** it comprises at least one protection cover (90) that provides protection of the membrane (80) from external effects.

## Patentansprüche

1. Druckausgleichsvorrichtung (A), die zum Ausgleichen des Drucks in Batterien verwendet wird, umfassend:
- einen Körper (20), der an einer Öffnung eines Batteriegehäuses (10) angebracht ist und in seinem Inneren einen Strömungskanal (22) aufweist, der den Durchfluss von Fluid ermöglicht,
- eine auf dem Körper (20) positionierte Abdeckung (30), die den Durchfluss von Fluid zwischen dem Inneren des Batteriegehäuses (10) und der Außenumgebung verhindert, indem sie den Strömungskanal (22) verschließt, wenn der Innendruck des Batteriegehäuses (10) und der Druck der Außenumgebung im Gleichgewicht sind, und der Fluiddurchfluss ermöglicht, indem er den Strömungskanal (22) öffnet, wenn eine Differenz zwischen dem Innendruck des Batteriegehäuses (10) und dem Druck der Außenumgebung auftritt,
- mindestens eine Feder (60), die es ermöglicht, den Arbeitsdruck der Druckausgleichsvorrichtung (A) in direktem Verhältnis zur Federkonstante festzulegen, und die es der Abdeckung (30) ermöglicht, sich automatisch zu schließen, wenn der Innendruck des Batteriegehäuses (10) und der Druck der Außenumgebung ausgeglichen sind, **dadurch gekennzeichnet, dass**
- die Druckausgleichsvorrichtung (A) ferner mindestens ein Verbindungselement (32) umfasst, das sich innerhalb des Strömungskanals (22) erstreckt, wobei die Feder (60) das Verbindungselement (32) umgibt, und das Verbindungselement (32) die Feder (60) zur Mitte des Strömungskanals (22) ausrichtet und es der Abdeckung (30) ermöglicht während des Öffnens in der Mitte des Strömungskanals (22) zu arbeiten.

2. Druckausgleichsvorrichtung (A) gemäß Anspruch 1, **dadurch gekennzeichnet, dass** die dem Strömungskanal (22) zugewandte Oberfläche der Abdeckung (30) in einer konkaven Form ausgebildet ist, was ermöglicht, dass sich die Menge des durchströmenden Fluids erhöht.

3. Druckausgleichsvorrichtung (A) gemäß Anspruch 1, **dadurch gekennzeichnet, dass** sie einen Sicherungsring (70) umfasst, der auf mindestens einem Stift (34) am Verbindungselement (32) angebracht ist und sicherstellt, dass die Feder (60) durch Zusammendrücken fixiert wird.

4. Druckausgleichsvorrichtung (A) gemäß Anspruch 1, **dadurch gekennzeichnet, dass** die Feder (60) helixartiger Form ausgebildet ist.

5. Druckausgleichsvorrichtung (A) gemäß Anspruch 1, **dadurch gekennzeichnet, dass** sie mindestens ein erstes Dichtungselement (40) umfasst, das in mindestens einer Nut (24) am Körper (20) angeordnet ist, und wenn die Abdeckung (30) in der geschlossenen Position ist, den Strömungskanal (22) abdichtet.

6. Druckausgleichsvorrichtung (A) gemäß Anspruch 5, **dadurch gekennzeichnet, dass** sie mindestens einen Vorsprung (26) am Ende der Nut (24) umfasst, der verhindert, dass das erste Dichtungselement (40) während des Durchflusses des Fluids aus der Nut (24) austritt.

7. Druckausgleichsvorrichtung (A) gemäß Anspruch 5, **dadurch gekennzeichnet, dass** das erste Dichtungselement (40) eine V-Form aufweist.

8. Druckausgleichsvorrichtung (A) gemäß Anspruch 1, **dadurch gekennzeichnet, dass** sie mindestens ein zweites Dichtungselement (50) umfasst, das zwischen dem Batteriegehäuse (10) und dem Körper (20) platziert ist und eine Abdichtung zwischen dem Batteriegehäuse (10) und dem Körper (20) bildet.

9. Druckausgleichsvorrichtung (A) gemäß Anspruch 8, **dadurch gekennzeichnet, dass** das zweite Dichtungselement (50) in einer genuteten Struktur vorliegt, um die Abdichtung zwischen dem Körper (20) und dem Batteriegehäuse (10) bei den Dicken des Batteriegehäuses (10) innerhalb eines vorbestimmten Dickenbereichs zu gewährleisten.

10. Druckausgleichsvorrichtung (A) gemäß Anspruch 1, **dadurch gekennzeichnet, dass** sie mindestens eine Membran (80) umfasst, die auf der Abdeckung (30) platziert ist und den Durchgang von Gas aus dem Inneren des Batteriegehäuses (10) zur Außenumgebung ermöglicht und den Durchgang von Flüssigkeit verhindert, wenn sich die Abdeckung (30) in der geschlossenen Position befindet.

11. Druckausgleichsvorrichtung (A) gemäß Anspruch 10, **dadurch gekennzeichnet, dass** sie mindestens eine Schutzabdeckung (90) umfasst, die die Membran (80) vor äußeren Einflüssen schützt.

## Revendications

1. Dispositif d'équilibrage de pression (A) employé pour équilibrer la pression dans les batteries, comprenant :
- un corps (20) qui est monté sur une ouverture d'un boîtier de batterie (10) et comportant à l'intérieur un canal d'écoulement (22) permettant le passage d'un fluide,
- un couvercle (30) positionné sur le corps (20), qui empêche le passage de fluide entre l'intérieur du boîtier de batterie (10) et l'environnement extérieur en fermant le canal d'écoulement (22) lorsque la pression interne du boîtier de batterie (10) et la pression externe de l'environnement sont équilibrées, et qui permet le passage de fluide en ouvrant le canal d'écoulement (22) quand une différence se produit entre la pression interne du boîtier de batterie (10) et la pression externe de l'environnement,
- au moins un ressort (60) qui permet à la pression de travail du dispositif d'équilibrage de pression (A) d'être déterminée en proportion directe de la constante du ressort, et qui permet au couvercle (30) de se fermer automatiquement lorsque la pression interne du boîtier de batterie (10) et la pression externe de l'environnement sont équilibrées, **caractérisé en ce que** :
- le dispositif d'équilibrage de pression (A) comprend en outre au moins un élément de connexion (32) qui s'étend dans le canal d'écoulement (22), dans lequel le ressort (60) entoure l'élément de connexion (32), et l'élément de connexion (32) aligne ledit ressort (60) avec le centre du canal d'écoulement (22) et permet audit couvercle (30) de fonctionner au centre du canal d'écoulement (22) pendant l'ouverture.

2. Dispositif d'équilibrage de pression (A) selon la revendication 1, **caractérisé en ce que** la surface du couvercle (30) faisant face au canal d'écoulement (22) a une forme concave, ce qui permet à la quantité de fluide en circulation d'augmenter.

3. Dispositif d'équilibrage de pression (A) selon la revendication 1, **caractérisé en ce qu'**il comprend une bague de blocage (70) qui est montée sur au moins un axe (34) sur l'élément de connexion (32) et assure que le ressort (60) est fixé par compression.

4. Dispositif d'équilibrage de pression (A) selon la revendication 1, **caractérisé en ce que** le ressort (60) est de forme hélicoïdale.

5. Dispositif d'équilibrage de pression (A) selon la revendication 1, **caractérisé en ce qu'**il comprend au moins un premier élément d'étanchéité (40) qui est placé dans au moins une rainure (24) sur le corps (20) et qui fournit une étanchéité du canal d'écoulement (22) quand le couvercle (30) est dans la position fermée.

6. Dispositif d'équilibrage de pression (A) selon la revendication 5, **caractérisé en ce qu'**il comprend au moins une protubérance (26) à l'extrémité de la rainure (24) qui empêche le premier élément d'étanchéité (40) de sortir de la rainure (24) pendant le passage du fluide.

7. Dispositif d'équilibrage de pression (A) selon la revendication 5, **caractérisé en ce que** le premier élément d'étanchéité (40) a une forme de « V ».

8. Dispositif d'équilibrage de pression (A) selon la revendication 1, **caractérisé en ce qu'**il comprend au moins un deuxième élément d'étanchéité (50) placé entre le boîtier de batterie (10) et le corps (20) et fournissant une étanchéité entre le boîtier de batterie (10) et le corps (20).

9. Dispositif d'équilibrage de pression (A) selon la revendication 8, **caractérisé en ce que** le deuxième élément d'étanchéité (50) est dans une structure rainurée afin de fournir l'étanchéité entre le corps (20) et le boîtier de batterie (10) au niveau des épaisseurs du boîtier de batterie (10) dans les limites d'une plage d'épaisseur prédéterminée.

10. Dispositif d'équilibrage de pression (A) selon la revendication 1, **caractérisé en ce qu'**il comprend au moins une membrane (80) placée sur le couvercle (30) qui permet le passage de gaz de l'intérieur du boîtier de batterie (10) à l'environnement extérieur et qui ne permet pas le passage de liquide quand le couvercle (30) est dans la position fermée.

11. Dispositif d'équilibrage de pression (A) selon la revendication 10, **caractérisé en ce qu'**il comprend au moins un couvercle de protection (90) qui fournit une protection de la membrane (80) par rapport aux effets extérieurs.
